# EUROPEAN PATENT SPECIFICATION

(11) **EP 1 043 143 B1**
(45) Date of publication and mention of the grant of the patent: **14.08.2002**
(21) Application number: 99830186.5
(22) Date of filing: 31.03.1999
(51) Int. Cl.: B29C 57/04, B29C 61/00

(54) **Method and apparatus for forming stable and internally regular bell mouth shapes on the terminal junction section of externally contoured pipes made of thermoplastic material**
Verfahren und Vorrichtung zum Formen von stabilen und innen regelmässigen Muffen an Enden von aussenkonturierten Kunststoffrohren
Procédé et dispositif pour le formage de tulipes stables et intérieurement lisses à l'extrémité de tubes en matière plastique extérieurement profilés

(43) Date of publication of application: 11.10.2000
(73) Proprietor: SICA S.p.A., 48011 Alfonsine (IT)
(72) Inventor: Savioli Leopoldo, 48001 Alfonsine RA (IT)
(74) Representative: Lanzoni, Luciano

(56) References cited:
- DE-A- 3 613 579
- FR-A- 2 022 958
- FR-A- 2 184 857
- US-A- 3 677 684
- US-A- 4 276 010

## Description

The present invention relates to a method and apparatus for forming stable and internally regular bell mouth shapes on the terminal junction section of externally contoured pipes made of thermoplastic material, of the type operating on a terminal junction section, previously heated to the plastic state and comprising the following successive phases and tools:
- a device able to produce a forced dilation of the terminal section, operated internally thereto, until pre-forming a first temporary bell mouth shape, of maximum dilation, whose temporary inner diameter exceeds the final nominal inner diameter of the definitive bell mouth shape;
- a mandrel for calibrating the definitive bell mouth shape, able to be freely introduced preventively into said first temporary bell mouth shape, structured with a fixed geometry and presenting an outer diameter equal to the final inner nominal diameter of the definitive bell mouth shape so as to calibrate it;
- cooling the definitive bell mouth shape by cooling means operating in correspondence with the calibration mandrel, thereby rapidly bringing the definitive bell mouth shape to ambient temperature.

In this technological sector there are difficulties to overcome, linked to the necessary precision that the bell mouth shapes must provide at least internally, in order to obtain an effective junction between multiple sections of pipe, as well as to the problem of the shrinking by the thermoplastic material, after the definitive formation of the bell mouth shape. It is well known that the molecules of the thermoplastic materials that are subjected to dimensional change, remember the previous physical state and tend to return to the original state. Hence when bell mouth shapes are effected, which increase the diameter of the pipe, extruded when hot, the pipe would tend to return to the previous state, i.e. with a smaller diameter than the one formed with the bell mouth shaping operation. Moreover, the aforesaid shrinking varies according to the thermoplastic material in use (polypropylene, PVC, polyethylene, polyolefins in general).

To solve the problem of the precision of the internal measurements of the bell mouth shaping, techniques have for instance been adopted whereby the bell mouths are shaped with mechanical mandrels conformed according to the bell mouth shape to be obtained. They are forcedly introduced into the terminal section of pipe to be given a bell mouth shape, previously heated to its plastic deformation temperature, provided the pipe to be treated has sufficient thicknesses so that it will not collapse during the introduction of the mandrel. In the case of bell mouth shapes that comprise internal annular gaskets, for better sealing, radially expandable and subsequently retractable mechanical sectors are provided to allow the formation, under heat, of the gasket seat in the bell mouth. In regard to the aforesaid technique, reference is made to European Patent EP. N.052.581, of 14 October 1981, in the name of the same Applicant, which provides a good description of the wedge shaped actuation means (with inclined planes for constraining each mechanical sector) and the conformation of the mechanical sectors themselves, so shaped as to constitute, when expanded, a homogeneous bearing surface for shaping, from within, the annular seat for the bell mouth gasket.

In document DE-3613579 an expandable mandrel is used The expandable portion of the mandrel has at least the same axial length as the bell mouth to be shaped In its contracted position the mandrel has a diameter lower than (or, at most, equal to) the internal diameter of the terminal junction of the pipe which has to be shaped in a bell mouth, so as to be freely introduced in the pipe itself prior to the expansion and after heating the terminal junction at the plastic state. Then, the bell mouth is produced by expanding the mandrel and enlarging its diameter up to the nominal final inner diameter of the bell mouth to be obtained.

In document FR-2022958 a mandrel, for forming a bell mouth at one end of a pipe, has a fixed diameter and is rotated around its longitudinal axis during the forced insertion in a pipe having circular or helicoidal external shapes, to reduce stresses and to limit the risk of making the pipe bend around or collapse along its axis during belling.

Techniques have also been studied that provide for exerting inward pressure from the exterior, on the pre-heated terminal section of the pipe, countered by an internal mandrel, but these techniques are not applicable to the case at hand, which aims at applying a precise bell mouth shape without material shrinking, also for corrugated pipes, which clearly cannot be treated under heat, with pressure by fluid or mechanical means from the exterior and which notoriously have rather low thicknesses, in favour of the corrugations and/or external fins or contours.

In order to solve the problem of the shrinking by the thermoplastic material, in 1983 the Applicant perfected an apparatus that provides a shaping chamber defined internally by a mandrel that presents the final shape and nominal measurements of the bell mouth to be obtained, and externally by moulds whereon the terminal section of pipe to be treated is preliminarily made to adhere, by means of pressurised air coming from the interior of the mandrel. The terminal section is thus expanded beyond its required nominal size, keeping it for a certain time in contact against the aforesaid external moulds, then letting the bell mouth so formed retract spontaneously and calibrate itself with precision on the underlying mandrel, whereon conduits for the outflow of the pressurised air are provided.

It has been observed that in such cases the shrinking by the thermoplastic material was absent or in any case highly reduced after the complete formation of the bell mouth shape and an adequate precision was obtained, since an internal calibration of the bell mouth shape was always present.

Unfortunately, this technique too is clearly not applicable to pipes made of thermoplastic material that are corrugated or externally provided with fins and/or contouring.

Therefore an apparatus has been realised by the same Applicant, as per EP 096.3833 (European patent application no. 98830360.8, of 11 June 1998) and as per the foreword to the description.

In this patent documentation, the device able to produce the forced dilation is a mandrel with mechanical sectors, radially movable from a first retracted position, wherein it can freely be introduced into the terminal section, to a second expanded position, wherein it dilates the terminal section until forming the temporary bell mouth shape with greater than nominal diameter.

This apparatus, although it is valuable to realise bell mouths on corrugated or contoured pipes, can nonetheless be further improved. It has been noted that this technique causes, on the inner surface of the bell mouth, some impressions due to contact with the lateral extremities of the radially moving sectors, during their passage from the retracted position of minimum size to that of maximum expansion or maximum size.

Therefore the aim of the invention, as it is characterised in the enclosed claims, is to eliminate the aforementioned drawback, providing additional advantages and retaining those already present.

The invention retains the advantage of being applicable to any type of thermoplastic pipe available on the market, including corrugated ones and those with external contouring (for instance, of the kind called ultrarib), notoriously with reduced thickness, realising stable bell mouths, in particular if made of polypropylene and the like (polyolefins).

It further provides the advantage of allowing very precise bell mouth shapes, with perfectly regular inner surfaces and without any kind of impression, even when the dilation of the terminal section beyond the nominal size of the bell mouth to be obtained is effected with mandrels of the kind with radially movable mechanical sectors.

Not the least advantage is also to provide a considerable rapidity of execution, a phase having been provided whereby the calibration operation is accelerated, by means of air pressure from the exterior, which can also be used effectively for corrugated pipes, which as is well known have never been subjected to said external pressures, due to the danger that they may implode.

Further features and advantages shall be made more readily apparent from the content of the detailed description that follows, made with reference to the accompanying drawings, which represent an embodiment provided purely by way of non limiting example, wherein:
- Figure 1 shows a schematic embodiment of the furnace useful to conduct the first necessary phase of heating the terminal junction section of the pipe whereon the bell mouth operation is to be performed;
- Figure 2 shows a schematic embodiment of the apparatus able to execute the phase aforesaid whereby the terminal section is dilated;
- Figure 3 shows a schematic embodiment of the apparatus able to execute the aforesaid calibration phase of the terminal section;
- Figures 4 and 5 schematically show an advantageous alternative embodiment of the apparatus and of the related method for the dilation and calibration of the terminal section;
- Figure 6 shows a section of a corrugated pipe according to the invention.

With reference to the aforementioned figures, the subject method is of the type operating on a terminal junction section (2) and comprising the following successive phases:
- forced dilation of the terminal section (2), operated internally thereto, until pre-forming a first temporary bell mouth (21'), with maximum dilation, whose temporary inner diameter (D12) is greater than the final inner nominal diameter (DN) of the definitive bell mouth (21);
- calibration of the definitive bell mouth (21) on a calibration mandrel (12) which can be freely introduced beforehand into the first temporary bell mouth (21'), whilst the mandrel (12), structured with fixed geometry, presents an outer diameter equal to the final inner nominal diameter (DN) of the definitive bell mouth (21);
- cooling the definitive bell mouth (21) through the use of cooling means (9, 99) operating in correspondence with the calibration mandrel (12), thereby rapidly bringing the definitive bell mouth (21) to ambient temperature.

It is instead characterised in that the phase whereby the first bell mouth (21') is forcedly dilated is effected by means of at least a first mandrel (11) with smooth outer surface, able to be progressively introduced into the terminal section (2), after heating the terminal section (2) to the plastic state, but in differentiated form.

A first quantity of heat (Q1) is transferred to the terminal section (2) thereby bringing it to an external temperature (TE) exceeding the internal temperature (TI), the latter being as low as possible in order to prevent the collapse of the thermoplastic material and yet sufficient to assure a correct plastic deformation, without any breaks in the molecular links of the thermoplastic material constituting the terminal section (2), during the dilation of the first mandrel (11) and in spite of the reduced thickness of the pipe (20).

In parallel, the apparatus with multiple operating phases, which also constitutes the subject of the invention, is of the kind operating on the terminal junction section (2) previously heated to the plastic state and comprising at least:
- a device able to preform on the terminal section (2), operating internally thereto, the first bell mouth (21');
- the calibration mandrel (12), able to be introduced freely and preventively into the first bell mouth (21'), after the complete intervention by said device, in such a way as to calibrate it exactly;
- cooling means (9, 99).

It is characterised instead in that the device able to pre-form the first bell mouth (21') comprises at least said first mandrel (11), with maximum diameter equal to the temporary diameter (D12), as well as a furnace (44) able preventively to heat the terminal section (2) to the plastic state, but in a differentiated manner, to an external temperature (TE) greater than the internal temperature (TI).

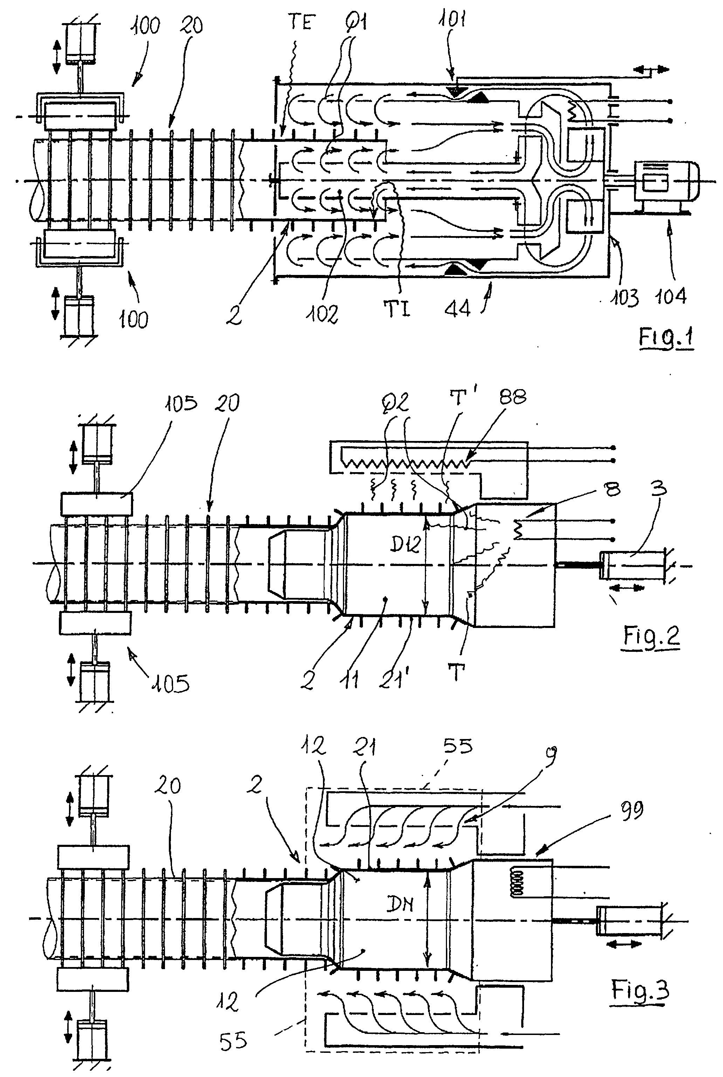

With reference in particular to Figure 1, the pipe (20) is held axially locked by the pair of rollers (100): the upper rollers are driving rollers and make the pipe (20) rotate around its axis, to make more homogeneous the preventive heating. This preferably takes place with hot air in dual circulation (external and internal to the pipe), according to a known patent in the Applicant's name. In the case at hand, it is noted that the subject pipe (of the ultrarib type) is heated more intensely in the external part of the wall of the pipe, appropriately regulating the quantity of hot air, by means of the small shutter (101), that laps the pipe both externally and internally to the pipe, where a holed conduit (102) is provided which conveys a calibrated quantity of air, that is recirculated, driven by an agitator (103), actuated by a related motor (104).

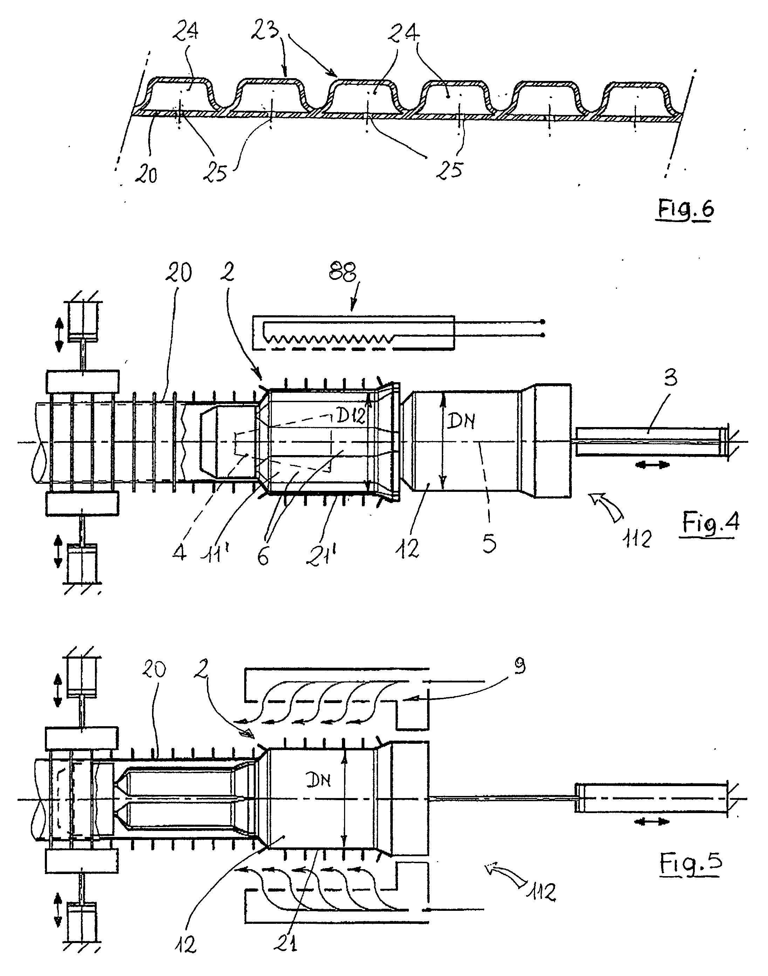

A further characteristic of the method rests in the fact that the dilation phase can be progressive and take place in at least two distinct phases, for instance with a pair of mandrels (11), structured with fixed geometry, the first with a lesser diameter than the second (whose diameter is (D12)), and acting consecutively to one another. An advantageous execution of the dilation method, after the aforesaid preliminary heating, provides for the dilation phase to be operated by means of a mandrel (11') of the type with radially movable mechanical sectors (6), set in their totally expanded, hence totally smooth, configuration. Their length, measured along the longitudinal axis (5) of the mandrel (11') is equal to the length of the bell mouth (21,21'). In this case it is very advantageous to place the mandrel (11') aligned with and forward of the calibration mandrel (12), the latter operating after the complete intervention of the mandrel (11') of the type with mechanical sectors (6), when it is in the minimum size configuration, contained inside the pipe (20) to be treated (see Figs. 4 and 5). The related apparatus comprises a single composite mandrel (112) designed on a single axis coaxial to the pipe (20) to be treated and presenting, as first mandrel, the mandrel (11') of the type with radially movable mechanical sectors (6) and as second mandrel the calibration mandrel (12). Also provided are organs (3) for imparting a relative motion between composite mandrel (112) and pipe (20), operating along the longitudinal axis (5) of the composite mandrel (112) and in combination and synchrony with organs (4) driving the expansion and retraction of the radially movable mechanical sectors (6). During the dilation phase (see Figs. 2 and 4), the pipe is held by clamps (105), fastened to the frame.

According to the subject method, a pre-set further quantity of heat (Q2) is simultaneously transferred inside the terminal section (2) by the first mandrel (11) or (11'), which is a heating mandrel, and outside the terminal section itself (2), so as to reduce its circumferential stresses caused on the wall of the terminal section (2) by effect of the dilation induced by the first mandrel (11) and in such a way as to favour the subsequent calibration phase.

The related apparatus presents means (8) for heating the mandrel (11) or (11') to a temperature (T) greater than that (TI) of the interior of the terminal section (2), the latter being also heated from the exterior by means (8) to a temperature (T') greater than (TE), so as to transfer heat to the terminal section (2).

The calibration phase advantageously starts immediately thereafter, with the terminal section (2) in the hot condition, it being immediately subsequent the dilation phase, without any removal of heat.

As soon as the calibration phase begins, a progressive and spontaneous reduction of the diameter of the terminal phase (2) also starts, from the dilated configuration characteristic of said first temporary bell mouth (21'), to the definitive one determined by the calibration mandrel (12), thanks to the quantity of heat still present on the terminal section (2) itself.

It is also possible to accelerate the spontaneous reduction in diameter of the terminal section (2) by means of the pressure applied by a compressed fluid acting from the exterior on the wall of the terminal section (2). The related apparatus in this case comprises, in combination with the calibration mandrel (12), means (55) able to exert compressed fluid pressure acting from the exterior on the outer wall of the terminal section (2) during the calibration phase, also to improve the regularity of the inner surface of the definitive bell mouth (21).

The apparatus and the method further provide for the diameter (DN) of the calibration mandrel (12) to be computed as a function of the constitution of the thermoplastic material.

Lastly, with reference to the corrugated pipe, it is important to stress that, after each undulated projection (23) of its corrugated surface there is an isolated annular channel (24), the latter placed in communication with the exterior through a hole (25), in such a way as to uniform both the interior and the exterior of the corrugated pipe to the same pressure, thereby eliminating at the root any danger that the pipe may implode, regardless of the pressure exerted on the corrugated pipe itself.

## Claims

1. Method for forming stable and internally regular bell mouths, on the terminal junction section of externally contoured pipes made of thermoplastic material, of the type operating on a terminal junction section (2), preventively heated to the plastic state and comprising the following successive phases:
- forced dilation of the terminal section (2), operated internally thereto, until pre-forming a first bell temporary bell mouth (21'), of maximum dilation, whose temporary inner diameter (D12) is greater than the final inner nominal diameter (DN) of the definitive bell mouth (21);
- calibration of the definitive bell mouth (21) on a calibration mandrel (12) which can be freely introduced preventively into the first bell mouth (21'), said mandrel (12) structured with fixed geometry, presenting an outer diameter equal to the final nominal inner diameter (DN) of the definitive bell mouth (21);
- cooling the definitive bell mouth (21) through the use of cooling means (9, 99) operating in correspondence with the calibration mandrel (12), in such a way as to bring the definitive bell mouth (21) to ambient temperature rapidly;
and wherein the phase of forced dilation of the first bell mouth (21') is operated by means of at least a first mandrel (11) with smooth outer surface, able to be progressively introduced into the terminal section (2), after heating to the plastic state, but in differentiated form, the terminal section (2) whereto a first quantity of heat (Q1) is transferred thereby bringing it to an external temperature (TE) exceeding the internal temperature (TI), the latter being as low as possible in order to prevent the thermoplastic material from collapsing and at the same time sufficient to assure a correct plastic deformation, without breaks in the molecular links of the thermoplastic material constituting the terminal section (2), during the dilation action of the first mandrel (11) and in spite of the reduced thickness of the pipe (20).

2. Method according to claim 1, **characterised in that** the dilation phase is progressive and takes place in at least two distinct phases.

3. Method according to claim 1, **characterised in that** the dilation phase is operated by means of a mandrel (11') of the type with mechanical sectors (6) radially movable and set in their totally expanded configuration, the length of said mechanical sectors (6), measured along the longitudinal axis (5) of the mandrel (11') being equal to the length of the bell mouth (21,21'), said mandrel (11') of the type with mechanical sectors (6) being aligned with and forward of the calibration mandrel (12), the latter operating after the complete intervention of the mandrel (11') of the type with mechanical sectors (6), when it is in the minimum size configuration, contained within the pipe (20) to be treated.

4. Method according to any of the previous claims, **characterised in that** a pre-set additional quantity of heat (Q2) is simultaneously transferred to the interior of the terminal section (2), by the first mandrel (11, 11') which is a heating mandrel, and to the exterior of the same terminal section (2), in such a way as to reduce its circumferential stresses caused on the wall of the terminal section (2) by effect of the dilation induced by the first mandrel (11, 11') and as to favour the successive calibration phase.

5. Method according to claim 4, **characterised in that** the calibration phase starts with the terminal section (2) in the heated state, it being immediately consecutive to the dilation phase, without any subtraction of heat.

6. Method according to claim 5, **characterised in that** as soon as the calibration phase starts, a progressive and spontaneous reduction in diameter of the terminal section (2) also starts from the dilated configuration characteristic of said first temporary bell mouth (21'), to the definitive one determined by the calibration mandrel (12), thanks to the quantity of heat still present on the terminal section (2) itself.

7. Method according to claim 6, **characterised in that** the spontaneous reduction in diameter of the terminal section (2) is accelerated by means of compressed fluid pressure acting from the exterior on the wall of the terminal section (2).

8. Method according to claim 7, whose pipe (20) to be treated is of the corrugated type, where each undulated projection (23) is involved by an isolated annular channel (24), **characterised in that** each said annular channel (24) is put in communication with the exterior, through at least a hole (25).

9. Apparatus for forming stable and internally regular bell mouths on the terminal junction section of externally contoured pipes made of thermoplastic material with reduced thickness, of the type operating on a terminal junction section (2) previously heated to the plastic state and comprising at least:
- a device able to pre-form on the terminal section (2), operating internally thereto, a first temporary bell mouth (21') whose temporary inner diameter (D12) exceeds the final inner nominal diameter (DN) of the definitive bell mouth (21);
- a calibration mandrel (12), able to be introduced freely and preventively into the first bell mouth (21'), after the complete intervention of said device, structured with fixed geometry and presenting an outer diameter equal to the nominal and final inner diameter (DN) of the definitive bell mouth (21), thereby calibrating it;
- cooling means (9, 99), operating in correspondence with the calibration mandrel (12), in such a way as to bring the definitive bell mouth (21) to ambient temperature rapidly; and wherein the device able to pre-form the first bell mouth (21') comprises at least a first mandrel (11) with smooth outer surface, able to be progressively introduced into the terminal section (2), as well as a furnace (44) able preventively to heat the terminal section (2) to the plastic state, but in differentiated form, to an external temperature (TE) exceeding the internal temperature (TI), the latter being as small as possible in order to prevent the collapse of the thermoplastic material and at the same time sufficient to assure a correct plastic deformation, without breaks in the molecular links of the thermoplastic material constituting the terminal section (2), during the dilation of the first mandrel (11) and in spite of the reduced thickness of the pipe (20).

10. Apparatus according to claim 9, **characterised in that** at least two mandrels (11) are provided, structured with fixed geometry, the first one with a smaller diameter than the second one, with maximum outer diameter equalling the inner temporary diameter (D12) of the first temporary bell mouth (21').

11. Apparatus according to claim 9, **characterised in that** said first mandrel is a mandrel (11) of the type with mechanical sectors (6) movable radially and set in their totally expanded configuration, which has a maximum external diameter equal to the temporary inner diameter (D12) of the first temporary bell mouth (21), the length of said mechanical sectors (6), measured along the longitudinal axis (5) of the mandrel (11') being equal to the length of the bell mouth (21,21), said mandrel (11') being aligned to and forward of the calibration mandrel (12), to form a single composite mandrel (112) devised on a single axis coaxial to the pipe (20) to be treated, organs (3) being provided for imparting relative motion between composite mandrel (112) and pipe (20), operating along the longitudinal axis (5) of the composite mandrel (112) and in combination and synchrony with organs (4) for actuating the expansion and retraction of the mandrel (11') of the type with radially movable mechanical sectors (6).

12. Apparatus according to claim 9 or 10 or 11, **characterised in that** at least the first mandrel (11, 11') presents means (8) for heating the mandrel itself to a temperature (T) exceeding the temperature (TI) of the interior of the terminal section (2), the latter also being heated from the exterior by means (88) to a temperature (T') exceeding (TE); thereby transferring heat to the terminal section (2).

13. Apparatus according to claim 9 or 10 or 11 or 12, **characterised in that** it comprises, in combination with said calibration mandrel (12), means (55) able to exert compressed fluid pressure acting from the exterior on the outer wall of the terminal section (2) during the calibration phase, to accelerate said phase and improve the regularity of the inner surface of the definitive bell mouth (21).

14. Apparatus and method according to any one of the previous claims, **characterised in that** the diameter (DN) of the calibration mandrel (12) is computed as a function of the constitution of the thermoplastic material.

## Patentansprüche

1. Verfahren zum Formen von stabilen und innen regelmässigen Muffen an Enden von aussen profilierten Kunststoffrohren von der Art, das auf einen Endverbindungsabschnitt (2) wirkt, der vorher bis auf den plastischen Zustand aufgeheizt wurde, und die nachstehenden aufeinanderfolgenden Phasen enthält:
- forcierte Aufweitung des Endabschnittes (2), ausgeübt von innen her, bis eine erste provisorische Muffe (21') von maximaler Aufweitung geformt ist, deren provisorischer Innendurchmesser (D12) grösser ist als der endgültige innere Nenndurchmesser (DN) der fertigen Muffe (21);
- Kalibrierung der endgültigen Muffe (21) auf einem Kalibrierdorn (12), welcher vorher frei in die erste Muffe (21') eingeschoben werden kann, wobei der genannte Dorn (12) nach einer festen Geometrie strukturiert ist und einen Aussendurchmesser aufweist, der dem endgültigen inneren Nenndurchmesser (DN) der fertigen Muffe (21) entspricht;
- Kühlen der fertigen Muffe (21) unter Verwendung von Kühlmitteln (9, 99), die entsprechend an dem Kalibrierdorn (12) arbeiten, und zwar auf solche Weise, dass die fertige Muffe (21) schnell auf Raumtemperatur gebracht wird;
- und bei welchem die Phase des forcierten Aufweitens der ersten Muffe (21') mit Hilfe von wenigstens einem ersten Dorn (11) mit einer glatten äusseren Oberfläche ausgeführt wird, der allmählich in den Endabschnitt (2) eingeschoben werden kann, und zwar nach dem Aufheizen bis auf den plastischen Zustand des Endabschnittes (2), aber in differenzierter Form, wozu eine erste Menge an Hitze (Q1) an diesen abgegeben und er dadurch auf eine Aussentemperatur (TE) gebracht wird, welche die Innentemperatur (TI) übersteigt, wobei letztere so niedrig wie möglich ist, um das Kunststoffmaterial am Zusammenfallen zu hindern, gleichzeitig aber ausreichend ist, um eine korrekte plastische Verformung zu gewährleisten, ohne Unterbrechung in den molekularen Verbindungen des den Endabschnitt (2) bildenden Kunststoffmaterials während der Aufweitung durch den ersten Dorn (11) und ungeachtet der reduzierten Stärke des Rohres (20).

2. Verfahren nach Patentanspruch 1, **dadurch gekennzeichnet, dass** die Phase der Aufweitung progressiv ist und in wenigstens zwei unterschiedlichen Phasen abläuft.

3. Verfahren nach Patentanspruch 1, **dadurch gekennzeichnet, dass** die Phase der Aufweitung mit Hilfe eines Dorns (11') ausgeführt wird, und zwar vom Typ mit mechanischen Abschnitten (6), die radial beweglich sind und in ihre voll ausgedehnte Konfiguration gebracht werden, wobei die Länge der mechanischen Abschnitte (6), gemessen entlang der Längsachse (5) des Dorns (11'), der Länge der Muffe (21, 21') entspricht, wobei der genannte Dorn (11') vom Typ mit mechanischen Abschnitten (6) zu und vor dem Kalibrierdorn (12) ausgerichtet und angeordnet ist, und wobei letzterer erst nach dem vervollständigten Eingriff des Dorns (11') vom Typ mit mechanischen Abschnitten (6) arbeitet, wenn dieser sich in seiner Darstellung der geringsten Abmessung befindet, enthalten im Inneren des zu bearbeitenden Rohres (20).

4. Verfahren nach einem beliebigen der vorstehenden Patentansprüche, **dadurch gekennzeichnet, dass** eine bestimmte zusätzliche Menge an Hitze (Q2) durch den ersten Dorn (11, 11'), welcher ein Heizdorn ist, gleichzeitig an den Innenbereich des Endabschnittes (2) geleitet wird, wie auch an den Aussenbereich desselben Endabschnittes (2), und zwar auf solche Weise, dass dessen Umfangsspannung reduziert wird, hervorgerufen an der Wand des Endabschnittes (2) durch die von dem ersten Dorn (11, 11') vorgenommene Aufweitung, und um die anschliessende Kalibrierphase zu erleichtern.

5. Verfahren nach Patentanspruch 4, **dadurch gekennzeichnet, dass** die Kalibrierphase mit dem Endabschnitt (2) in aufgeheiztem Zustand beginnt, da sie unmittelbar im Anschluss an die Phase der Aufweitung erfolgt, ohne irgendwelchen Entzug an Hitze.

6. Verfahren nach Patentanspruch 5, **dadurch gekennzeichnet, dass**, sobald die Kalibrierphase einsetzt, ebenfalls eine progressive und spontane Reduzierung des Durchmessers des Endabschnittes (2) beginnt, und zwar von der aufgeweiteten, typischen Darstellung der genannten ersten provisorischen Muffe (21') bis zu der endgültigen, bewirkt durch den Kalibrierdorn (12) dank der Menge an Hitze, die noch in dem Endabschnitt (2) selbst vorhanden ist.

7. Verfahren nach Patentanspruch 6, **dadurch gekennzeichnet, dass** die spontane Reduzierung des Durchmessers des Endabschnittes (2) durch den Druck einer Druckflüssigkeit beschleunigt wird, welche von aussen her auf die Wand des Endabschnittes (2) wirkt.

8. Verfahren nach Patentanspruch 7, dessen zu behandelndes Rohr (20) vom gewellten Typ ist, und bei welchem jeder gewellte Vorsprung (23) von einem isolierten, ringförmigen Kanal (24) betroffen ist, **dadurch gekennzeichnet, dass** jeder genannte ringförmige Kanal (24) durch wenigstens eine Öffnung (25) mit dem Aussenbereich in Verbindung steht.

9. Vorrichtung zum Formen von stabilen und innen regelmässigen Muffen an dem Endabschnitt von aussen profilierten Kunststoffrohren von reduzierter Stärke, von der Art, die auf einen Endverbindungsabschnitt (2) wirkt, der vorher bis auf den plastischen Zustand aufgeheizt wurde, und die wenigstens wie folgt enthält:
- eine Vorrichtung, die in der Lage ist, an dem Endabschnitt (2), wobei sie im Inneren desselben arbeitet, eine erste provisorische Muffe (21') zu formen, deren provisorischer Innendurchmesser (D12) über den inneren Nenndurchmesser (DN) der fertigen Muffe (21) hinausgeht;
- einen Kalibrierdorn (12), der vorher frei in die erste Muffe (21') eingeschoben werden kann, und zwar nach dem vervollständigten Eingriff der genannten Vorrichtung, strukturiert nach einer festen Geometrie und einen Aussendurchmesser aufweisend, der dem endgültigen inneren Nenndurchmesser (DN) der fertigen Muffe (21) entspricht, wobei diese kalibriert wird;
- Kühlmittel (9, 99), die entsprechend an dem Kalibrierdorn (12) arbeiten, und zwar auf solche Weise, dass die fertige Muffe (21) schnell auf Raumtemperatur gebracht wird;
- und bei welcher die Vorrichtung zum Vorformen der ersten Muffe (21') wenigstens einen ersten Dorn (11) mit einer glatten äusseren Oberfläche enthält, der allmählich in den Endabschnitt (2) eingeschoben werden kann, sowie einen Ofen (44), der in der Lage ist, den Endabschnitt (2) bis auf einen plastischen Zustand aufzuheizen, aber in differenzierter Form und bis auf eine Aussentemperatur (TE), welche die Innentemperatur (TI) übersteigt, wobei letztere so niedrig wie möglich ist, um das Kunststoffmaterial am Zusammenfallen zu hindern, gleichzeitig aber ausreichend ist, um eine korrekte plastische Verformung zu gewährleisten, ohne Unterbrechung in den molekularen Verbindungen des den Endabschnitt (2) bildenden Kunststoffmaterials während der Aufweitung durch den ersten Dorn (11) und ungeachtet der reduzierten Stärke des Rohres (20).

10. Vorrichtung nach Patentanspruch 9, **dadurch gekennzeichnet, dass** wenigstens zwei Dorne (11) vorgesehen sind, strukturiert nach einer festen Geometrie, von denen der erste einen kleineren Durchmesser hat als der zweite mit einem maximalen Aussendurchmesser, der dem provisorischen Innendurchmesser (D12) der ersten provisorischen Muffe (21') entspricht.

11. Vorrichtung nach Patentanspruch 9, **dadurch gekennzeichnet, dass** der genannte erste Dorn ein Dorn (11) vom Typ mit mechanischen Abschnitten (6) ist, die radial beweglich sind und in ihre voll ausgedehnte Konfiguration gebracht werden, welche einen maximalen Aussendurchmesser entsprechend dem provisorischen Innendurchmesser (D12) der ersten provisorischen Muffe (21') hat, wobei die Länge der mechanischen Abschnitte (6), gemessen entlang der Längsachse (5) des Dorns (11'), der Länge der Muffe (21, 21') entspricht, wobei der genannte Dorn (11') zu und vor dem Kalibrierdorn (12) ausgerichtet und angeordnet ist, um einen einzigen zusammengesetzten Dorn (112) zu bilden, konstruiert auf einer einzigen Achse koaxial zu dem zu behandelnden Rohr (20), wobei Elemente (3) vorgesehen sind, um eine entsprechende Bewegung zwischen dem zusammengesetzten Dorn (112) und dem Rohr (20) auszulösen, die entlang der Längsachse (5) des zusammengesetzten Dorns (112) sowie zusammen und synchron mit Elementen (4) arbeiten, die das Ausdehnen und das Zusammenziehen des Dorns (11') vom Typ mit radial beweglichen mechanischen Abschnitten (6) bewirken.

12. Vorrichtung nach Patentanspruch 9 oder 10 oder 11, **dadurch gekennzeichnet, dass** wenigstens der erste Dorn (11, 11') Mittel (8) zum Aufheizen des Dorns selbst auf eine Temperatur (T) aufweist, welche die Temperatur (TI) im Inneren des Endabschnittes (2) übersteigt, wobei letzterer auch von aussen her durch Mittel (88) auf eine Temperatur (T') aufgeheizt wird, welche (TE) übersteigt, wodurch Hitze auf den Endabschnitt (2) übertragen wird.

13. Vorrichtung nach Patentanspruch 9 oder 10 oder 11 oder 12, **dadurch gekennzeichnet, dass** sie in Kombination mit dem genannten Kalibrierdorn (12) Mittel (55) enthält, die in der Lage sind, während der Kalibrierphase einen Druck mit einer Druckflüssigkeit von aussen auf die äussere Wand des Endabschnittes (2) auszuüben, um die genannte Phase zu beschleunigen und die Regelmässigkeit der inneren Oberfläche der fertigen Muffe (21) zu verbessern.

14. Vorrichtung und Verfahren nach einem beliebigen der vorstehenden Patentansprüche, **dadurch gekennzeichnet, dass** der Durchmesser (DN) des Kalibrierdorns (12) je nach der Beschaffenheit des Kunststoffmaterials berechnet ist.

## Revendications

1. Procédé pour le formage de tulipes stables et intérieurement lisses, à l'extrémité de jonction de tubes en matière plastique extérieurement profilés, du type opérant sur une extrémité de jonction (2), auparavant réchauffée à l'état plastique, et comprenant les phases successives suivantes:
- dilatation forcée de l'extrémité de jonction (2), exécutée à l'intérieur de cette dernière, jusqu'au préformage d'une première tulipe provisoire (21'), de dilatation maximum, dont le diamètre interne provisoire (D12) est supérieur au diamètre nominal interne (DN) de la tulipe définitive (21);
- calibration de la tulipe définitive (21) sur un mandrin de calibration (12) pouvant être librement introduit auparavant sur la première tulipe (21'), ledit mandrin (12) étant de géométrie fixe et présentant un diamètre externe égal au diamètre interne nominal final (DN) de la tulipe définitive (21);
- refroidissement de la tulipe définitive (21) grâce à l'utilisation de moyens de refroidissement (9, 99) opérant en correspondance du mandrin de calibration (12), de manière à porter rapidement la tulipe définitive (21) à température ambiente;
et dans lequel la phase de dilatation forcée de la première tulipe (21') est réalisée au moyen d'au moins un premier mandrin (11) avec une surface externe lisse, pouvant être progressivement introduit dans l'extrémité (2), après que cette dernière ait été réchauffée à l'état plastique, mais dans une forme différenciée, extrémité (2) à laquelle est transférée une première quantité de chaleur (Q1) en la portant à une température externe (TE) excédant la température interne (TI), cette dernière étant la plus basse possible de manière à empêcher le matériau plastique de s'affaisser mais également suffisante pour assurer une déformation plastique correcte, sans rupture des liaisons moléculaires du matériau thermoplastique constituant l'extrémité (2), pendant l'action de dilatation du premier mandrin (11) et malgré l'épaisseur réduite du tube (20).

2. Procédé selon la revendication 1, **caractérisé en ce que** la phase de dilatation est progressive et a lieu dans au moins deux phases distinctes.

3. Procédé selon la revendication 1, **caractérisé en ce que** la phase de dilatation est réalisée au moyen d'un mandrin (11') du type à secteurs mécaniques (6) mobiles radialement et disposés dans leur configuration totalement expansée, la longueur desdits secteurs mécaniques (6), mesurée le long de l'axe longitudinal (5) du mandrin (11'), étant égale à la longueur de la tulipe (21, 21'), ledit mandrin (11') du type à secteurs mécaniques (6) étant aligné antérieurement au mandrin de calibration (12), ce dernier opérant après la complète intervention du mandrin (11') du type à secteurs mécaniques (6), quand ce dernier est dans sa configuration de dimensions minimum, contenue dans le tube (20) à traîter.

4. Procédé selon n'importe laquelle des revendications précédentes, **caractérisé en ce qu'**une prédéterminée quantité additionnelle de chaleur (Q2) est simultanément transférée à l'intérieur de l'extrémité (2), par le premier mandrin (11, 11') qui est réchauffé, et à l'extrérieur de cette même extrémité (2), de manière à réduire les contraintes circonférentielles causées sur la paroi de l'extrémité (2) sous l'effet de la dilatation induite par le premier mandrin (11, 11') et à favoriser la phase de calibration successive.

5. Procédé selon la revendication 4, **caractérisé en ce que** la phase de calibration commence avec l'extrémité (2) à l'état plastique, et est immédiatement successive à la phase de dilatation, sans aucune soustraction de chaleur.

6. Procédé selon la revendication 5, **caractérisé en ce que** dès que commence la phase de calibration, commence également une réduction progressive et spontanée du diamètre de l'extrémité (2) depuis la configuration dilatée caractéristique de ladite première tulipe provisoire (21') à la configuration définitive déterminée par le mandrin de calibration (12), grâce à la quantité de chaleur encore présente dans l'extrémité (2) elle-même.

7. Procédé selon la revendication 6, **caractérisé en ce que** la réduction spontanée du diamètre de l'extrémité (2) est accélérée au moyen d'un fluide pressurisé agissant depuis l'extérieur de la paroi de l'extrémité (2).

8. Procédé selon la revendication 7, **caractérisé en ce que** le tube (20) à traîter est de type ondulé, dans lequel chaque saillie ondulée (23) est mise en relation avec un canal annulaire isolé (24), **caractérisé en ce que** chaque canal annulaire (24) est mis en communication avec l'extérieur, par l'intermédiaire d'au moins un orifice (25).

9. Dispositif pour le formage de tulipes stables et intérieurement lisses, à l'extrémité de jonction de tubes en matière plastique extérieurement profilés et d'épaisseur réduite, du type opérant sur une extrémité (2) auparavant réchauffée à l'état plastique et comprenant au moins:
- un dispositif pouvant pré-former sur l'extrémité (2), en opérant à l'intérieur de cette dernière, une première tulipe provisoire (21') dont le diamètre interne provisoire (D12) excède le diamètre interne final nominal (DN) de la tulipe définitive (21);
- un mandrin de calibration (12), pouvant être auparavant librement introduit dans la première tulipe (21'), après la complète intervention dudit dispositif, structuré avec une géométrie fixe et présentant un diamètre externe égal au diamètre nominal et final interne (DN) de la tulipe définitive (21), en calibrant cette dernière;
- des moyens de refroidissement (9, 99), opérant en correspondance du mandrin de calibration (12), de manière à porter rapidement la tulipe définitive (21) à température ambiente;
et dans lequel le dispositif pouvant pré-former la première tulipe (21') comprend au moins un premier mandrin (11) avec une surface externe lisse, pouvant être progressivement introduite dans l'extrémité (2), ainsi qu'un four (44) pouvant préventivement réchauffer l'extrémité (2) à l'état plastique, mais sous forme différenciée, à une température externe (TE) excédant la température interne (TI), cette dernière étant la plus basse possible de manière à empêcher le matériau plastique de s'affaisser mais également suffisante pour assurer une déformation plastique correcte, sans rupture des liaisons moléculaires du matériau thermoplastique constituant l'extrémité (2), pendant l'action de dilatation du premier mandrin (11) et malgré l'épaisseur réduite du tube (20).

10. Dispositif selon la revendication 9, **caractérisé en ce qu'**au moins deux mandrins (11) sont prévus, structurés avec une géométrie fixe, le premier avec un diamètre inférieur au second, avec un diamètre extérieur maximum égal au diamètre interne provisoire (D12) de la première tulipe provisoire (21').

11. Dispositif selon la revendication 9, **caractérisé en ce que** ledit premier mandrin (11) est du type à secteurs mécaniques (6) mobiles radialement et disposés dans leur configuration totalement expansée, qui présente un diamètre externe maximum égal au diamètre interne provisoire (D12) de la première tulipe provisoire (21), la longueur desdits secteurs mécaniques (6), mesurée le long de l'axe longitudinal (5) du mandrin (11'), étant égale à la longueur de la tulipe (21), ledit mandrin (11') étant aligné et au devant du mandrin de calibration (12), pour former un unique mandrin composé (112) disposé sur un seul axe coaxial au tube (20) à traîter, des organes (3) étant prévus pour donner un mouvement relatif entre le mandrin composé (112) et le tube (20), opérant le long de l'axe longitudinal (5) du mandrin composite (112) et en combinaison et synchronicité avec des organes (4) pour réaliser l'expansion et la rétraction du mandrin (11') du type ayant des secteur mécaniques (6) mobiles radialement.

12. Dispositif selon la revendication 9, 10 ou 11, **caractérisé en ce qu'**au moins le premier mandrin (11, 11') présente des moyens (8) pour réchauffer le mandrin lui-même à une température (T) excédant la température (TI) de l'intérieur de l'extrémité (2), cette dernière étant également réchauffée depuis l'extérieur par des moyens (88) à une température (T') excédant (TE), en transferant ainsi de la chaleur à l'extrémité (2).

13. Dispositif selon la revendication 9, 10, 11 ou 12, **caractérisée en ce qu'**elle comprend, en combinaison avec ledit mandrin de calibration (12), des moyens (55) pouvant exercer une pression par l'intermédiaire d'un fluide sous pression agissant depuis l'extérieur sur la paroi externe de l'extrémité (2) pendant la phase de calibration, pour accélérer ladite phase et améliorer la régularité de la surface interne de la tulipe définitive (21).

14. Dispositif et procédé selon n'importe laquelle des revendications précédentes, **caractérisés en ce que** le diamètre (DN) du mandrin de calibration (12) est calculé en fonction de la constitution du matériau thermoplastique.
